# FASCICULE DE BREVET EUROPEEN

(11) **EP 3 533 365 B1**
(45) Date de publication et mention de la délivrance du brevet: **25.11.2020**
(21) Numéro de dépôt: 19157879.8
(22) Date de dépôt: 18.02.2019
(51) Int. Cl.: A47J 36/00, A47J 27/00

(54) **PROCEDE DE DETERMINATION D'UN INDICE DE PERFORMANCE D'UN RECIPIENT DE CUISSON REPRESENTATIF DE L'INERTIE THERMIQUE**
VERFAHREN ZUR BESTIMMUNG DES LEISTUNGSINDEXES EINES KOCHBEHÄLTERS, DER REPRÄSENTATIV FÜR DIE THERMISCHE TRÄGHEIT IST
METHOD FOR DETERMINING A PERFORMANCE INDEX OF A COOKING VESSEL REPRESENTING THERMAL INERTIA

(30) Priorité: 28.02.2018 FR 1851782
(43) Date de publication de la demande: 04.09.2019
(73) Titulaire: SEB S.A., 69130 Ecully (FR)
(72) Inventeur: CUILLERY, Pascal, 74210 FAVERGES (FR)
(74) Mandataire: SEB Developpement Brevets

(56) Documents cités:
- EP-A1- 3 155 941
- WO-A1-2014/009645
- FR-A1- 3 047 396

## Description

La présente invention concerne un procédé de détermination d'un indice de performance d'un récipient de cuisson soumis à une puissance de chauffe générée par des moyens de chauffe, ledit indice étant représentatif de l'inertie thermique dudit récipient de cuisson pour permettre notamment de saisir des aliments, le récipient de cuisson étant notamment une poêle, une casserole, une sauteuse ou un faitout.

Un critère de réussite d'une cuisson *saisie* d'un aliment, notamment d'une viande, est l'absence d'apparition de jus de cuisson sur le pourtour de l'aliment. Cet exsudat provoqué par la contraction des protéines peut apparaitre au démarrage de la saisie car la puissance disponible ou l'inertie thermique du récipient de cuisson n'est pas suffisante pour l'évaporer : la viande est cuite dans son jus et le résultat est une viande *bouillie,* non marquée.

Les récipients de cuisson vendus dans le commerce présentent, dans une même famille une construction technique très différente d'un récipient de cuisson à l'autre, mais qui n'est pas visible par le consommateur. Ainsi, ils présentent une forme extérieure relativement similaire et le consommateur a peu d'éléments pour comparer et apprécier la performance de cuisson de deux ou plusieurs récipients de cuisson.

Par exemple, une poêle de diamètre 28 centimètres peut être fabriquée à partir d'une feuille d'acier inoxydable, à partir d'une feuille d'aluminium, à partir d'une feuille issue d'un assemblage de plusieurs couches, notamment d'acier inoxydable, d'aluminium ou de cuivre. L'épaisseur de ces différentes feuilles peut être également très variable. La capacité de la poêle à évaporer le jus de cuisson sur le pourtour de l'aliment pour le saisir dépendra donc fortement de la construction technique. Le document FR3047396A1 divulgue un procédé de détermination d'un indice de performance d'un récipient de cuisson.

Le but de la présente invention est de proposer pour un récipient de cuisson donné, un procédé de détermination d'un indice de performance représentatif de l'inertie thermique du récipient pour saisir des aliments et ainsi de permettre au consommateur de comparer la performance de cuisson de deux récipients de cuisson de constructions différentes.

Un autre but de l'invention est de proposer un procédé qui soit simple et économique à mettre en œuvre.

Ces buts sont atteints avec un procédé de détermination d'un indice de performance d'un récipient de cuisson soumis à une puissance de chauffe générée par des moyens de chauffe, ledit indice étant représentatif de l'inertie thermique dudit récipient de cuisson pour saisir des aliments, ledit récipient de cuisson comprenant un fond et une paroi latérale, caractérisé en ce qu'il comprend les étapes suivantes :
a) soumettre le fond du récipient de cuisson aux moyens de chauffe mis en marche à une puissance de chauffe déterminée, l'échauffement du fond entrainant une élévation de la température d'une face supérieure du fond et de la paroi latérale,
b) mesurer et enregistrer à intervalles de temps réguliers la température de la face supérieure du fond jusqu'à ce que la température mesurée atteigne une température prédéterminée T,
c) couper les moyens de chauffe et verser simultanément une quantité prédéterminée d'eau dans le récipient de cuisson à un instant T0,
d) mesurer et enregistrer à intervalles de temps réguliers la masse de l'eau résiduelle dans le récipient de cuisson,
e) déterminer l'indice de performance à partir des calculs et enregistrements réalisés de la masse d'eau résiduelle.

La demanderesse a mis en évidence qu'un indice de performance basé sur la mesure de la masse de l'eau résiduelle, donc de l'aptitude d'un récipient de cuisson à évaporer de l'eau après une période de préchauffe était représentatif de l'aptitude du récipient de cuisson à évaporer le jus de cuisson sur le pourtour de l'aliment lors de la saisie.

Avantageusement, à l'étape e), on détermine l'indice de performance qui est égal à la différence entre la masse de l'eau résiduelle M1 mesurée à un instant T1 et la masse de l'eau résiduelle M2 mesurée un instant T2.

De manière avantageuse, l'instant T1 peut correspondre à l'instant T0.

De préférence, T1 est égal à T0 + 5 secondes et T2 est égal à T0 + 95 secondes.

La demanderesse a mis en évidence que l'instant T0 + 95 secondes correspondait à la fin de l'ébullition de la masse d'eau résiduelle. La demanderesse a mis également en évidence que la mesure de la masse d'eau résiduelle était difficile à réaliser entre T0 et T0 + 5 secondes, période dans laquelle l'eau entre violemment en ébullition.

Cette disposition permet de déterminer facilement et simplement un indice de performance pertinent.

Avantageusement, l'indice de performance est égal à la moyenne de N mesures successives de l'indice de performance, N étant supérieur à 5, de préférence supérieur à 10.

Cette disposition permet d'améliorer la fiabilité de l'indice de performance.

De préférence, à l'étape d), la masse prédéterminée d'eau M est supérieure à 150 grammes, de préférence supérieure à 200g.

Une telle masse est proche de la masse d'un ou plusieurs aliments cuits en conditions réelles d'utilisation.

Avantageusement, à l'étape d), on met en œuvre une balance sur laquelle sont agencés les moyens de chauffe et le récipient de cuisson.

Ainsi, la mesure de la masse d'eau résiduelle peut être réalisée sans toucher au récipient de cuisson, juste après avoir coupé les moyens de chauffe et versé la quantité prédéterminée d'eau dans le récipient de cuisson.

De préférence, à l'étape b), la température prédéterminée T est supérieure ou égale à 200°C.

Ainsi, la température prédéterminée T de préchauffe du récipient de cuisson correspond à la température de préchauffe pour saisir les aliments en conditions réelles d'utilisation.

Avantageusement, à l'étape b), on met en œuvre un pistolet thermique pour mesurer la température de la face supérieure du fond.

Ainsi, la mesure de la température est réalisée sans contact avec le récipient de cuisson et permet de ne pas perturber la mesure de la masse d'eau résiduelle.

De préférence, les moyens de chauffe sont formés par une plaque de cuisson au gaz.

'inertie thermique d'une plaque de cuisson au gaz est très faible. Ainsi, uniquement l'inertie thermique du récipient intervient pour faire évaporer la masse d'eau introduite dans le récipient de cuisson après la coupure de la source de chauffe.

Avantageusement, à l'étape d), l'intervalle de temps pour mesurer et enregistrer la masse d'eau résiduelle est d'une seconde.

Un tel intervalle de temps est suffisamment court pour bien enregistrer la progression de la masse d'eau résiduelle.

De préférence, le récipient de cuisson est une casserole, une sauteuse ou un faitout.

L'invention sera mieux comprise à l'étude du mode de réalisation pris à titre nullement limitatif et illustré dans la figure annexée dans laquelle :
- La figure 1 illustre une vue schématique d'un premier récipient de cuisson selon un mode particulier de mise en œuvre de l'invention,
- La figure 2 illustre une vue schématique d'un second récipient de cuisson selon le mode de mise en œuvre de l'invention de la figure 1.

On notera que, dans ce document, les termes « horizontal », « vertical », « inférieur », « supérieur », « haut », « bas », employés pour décrire le récipient de cuisson, font référence à ce récipient de cuisson en situation d'usage, lorsqu'il est posé sur des moyens de chauffe ou sur un plan horizontal.

Le procédé mis en œuvre permet de déterminer un indice de performance d'un récipient de cuisson 1a, 1b soumis à la puissance de chauffe générée par des moyens de chauffe 20. Cet indice de performance est représentatif de l'inertie thermique du récipient pour saisir des aliments et ainsi de permettre au consommateur de comparer la performance de cuisson de deux récipients de cuisson de constructions différentes.

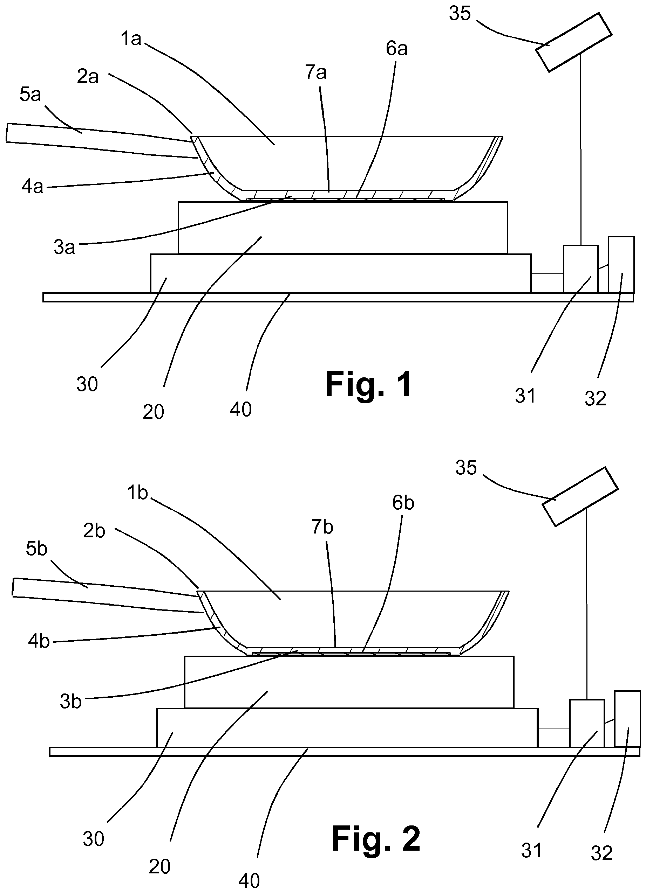

Tel que visible aux figures 1 et 2, le procédé est mis en œuvre pour déterminer l'indice de performance d'un premier 1a et d'un second 1b récipient de cuisson de même taille : une poêle de diamètre 28 centimètres, mais qui présentent deux constructions différentes. Le premier récipient de cuisson 1a comporte une calotte 2a réalisée en une couche d'aluminium d'épaisseur 6 millimètres, réalisée en une opération de fonderie. Le second récipient de cuisson 1b comporte une calotte 2b réalisée en une couche d'aluminium d'épaisseur 4 millimètres, réalisée par une opération de frappe à froid. Les premier 1a et second 1b récipients de cuisson comportent un fond 3a, 3b comprenant une plaque 6a, 6b en acier inoxydable rapportée par frappe pour les rendre compatibles avec un fond chauffant par induction. Chaque calotte 2a, 2b comprend le fond 3a, 3b et une paroi latérale 4a, 4b munie d'une poignée 5a, 5b.

Chaque récipient de cuisson 1a, 1b repose sur une plaque de chauffe au gaz 20. La plaque de chauffe au gaz 20 est agencée sur une balance 30 qui repose sur un plan de travail 40. Un pistolet thermique 35 est agencé au dessus de chaque récipient de cuisson 1a, 1b pour mesurer la température de chaque face supérieure 7a, 7b de chaque fond 3a, 3b. La balance 30 et le pistolet thermique 35 sont reliés à une centrale d'acquisition de mesures 31. La centrale d'acquisition de mesures 31 est reliée à un ordinateur 32 destiné à réaliser les calculs.

Le procédé de détermination d'un indice de performance pour le récipient de cuisson 1a comprend les étapes suivantes :
a) soumettre le fond 3a du récipient de cuisson 1a à une plaque de chauffe au gaz 20 mise en marche à une puissance de chauffe déterminée, par exemple sur un foyer moyen, l'échauffement du fond 3a entrainant une élévation de la température d'une face supérieure 7a du fond 3a et de la paroi latérale 4a,
b) mesurer avec le pistolet thermique 35 et enregistrer à intervalles de temps réguliers la température de la face supérieure 7a du fond 3a jusqu'à ce que la température mesurée atteigne une température prédéterminée T égale à 200°C,
c) couper la plaque de chauffe au gaz 20 et verser simultanément une masse prédéterminée d'eau M égale à 200 grammes dans le récipient de cuisson 1a, à un instant T0,
d) mesurer et enregistrer à intervalles de temps d'une seconde la masse de l'eau résiduelle avec la centrale d'acquisition de mesures 31,
e) déterminer l'indice de performance qui est égal à la différence entre la masse de l'eau résiduelle M1 mesurée à un instant T1 = T0 + 5 secondes et la masse de l'eau résiduelle M2 mesurée à un instant T2 = T0 + 95 secondes.

Dans une variante de réalisation, on répète 10 fois le même protocole avec le même récipient de cuisson 1a et l'indice de performance final est égal à la moyenne des 10 indices de performances déterminés successivement.

Le procédé de détermination d'un indice de performance pour le récipient de cuisson 1b est identique au procédé de détermination d'un indice de performance pour le récipient de cuisson 1a.

Le tableau ci-dessous récapitule les résultats pour les 10 indices de performances IPn déterminés successivement pour chaque récipient de cuisson 1a et 1b, ainsi que l'indice de performance IP final.

| | Récipient de cuisson 1a | Récipient de cuisson 1b |
|---|---|---|
| IP1 | 17,87 | 10,52 |
| IP2 | 18,19 | 10,93 |
| IP3 | 18,14 | 11,84 |
| IP4 | 15,54 | 9,96 |
| IP5 | 15,08 | 9,44 |
| IP6 | 16,61 | 10,02 |
| IP7 | 15,03 | 9,83 |
| IP8 | 16,65 | 11,04 |
| IP9 | 16,54 | 11,35 |
| IP10 | 15,71 | 10,7 |
| IP final | 16,536 | 10,563 |

Si l'on considère que le procédé mis en œuvre sur la famille de récipients de cuisson du type poêle de diamètre 28 centimètres donne une échelle pour l'indice de performance de 3 à 30, le consommateur pourra comprendre que le premier récipient de cuisson 1a avec un indice de 16,536, a la capacité de très bien saisir un aliment, notamment une viande, et garantit une bonne cuisson de l'aliment. Avec un indice de performance de 10,563, le consommateur pourra comprendre que le second récipient de cuisson 1b présente une capacité moyenne voire faible à bien saisir un aliment.

Si le consommateur souhaite comparer le premier récipient de cuisson 1a et le second récipient de cuisson 1b, il pourra comprendre que si le second récipient de cuisson 1b est la référence, le premier récipient de cuisson 1a présente un indice de performance accru de : (16,536 - 10,563) x 100 / 10,563 = 56%.

Bien entendu, l'invention n'est nullement limitée aux modes de réalisation décrits qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

Ainsi, dans une variante de mise en œuvre, on utilise des moyens de chauffage par induction pour déterminer un indice de performance d'un récipient de cuisson compatible avec un tel moyen de chauffage.

## Revendications

1. Procédé de détermination d'un indice de performance d'un récipient de cuisson (1a, 1b) soumis à une puissance de chauffe générée par des moyens de chauffe (20), ledit indice étant représentatif de l'inertie thermique dudit récipient de cuisson (1a, 1b) pour saisir des aliments, ledit récipient de cuisson (1a, 1b) comprenant un fond (3a, 3b) et une paroi latérale (4a, 4b), **caractérisé en ce qu'**il comprend les étapes suivantes :
a) soumettre le fond (3a, 3b) du récipient de cuisson (1a, 1b) aux moyens de chauffe (20) mis en marche à une puissance de chauffe déterminée, l'échauffement du fond (3a, 3b) entrainant une élévation de la température d'une face supérieure (7a, 7b) du fond (3a, 3b) et de la paroi latérale (4a, 4b),
b) mesurer et enregistrer à intervalles de temps réguliers la température de la face supérieure (7a, 7b) du fond (3a, 3b) jusqu'à ce que la température mesurée atteigne une température prédéterminée T,
c) couper les moyens de chauffe (20) et verser simultanément une masse prédéterminée d'eau M dans le récipient de cuisson à un instant T0,
d) mesurer et enregistrer à intervalles de temps réguliers la masse de l'eau résiduelle dans le récipient de cuisson,
e) déterminer l'indice de performance à partir des calculs et enregistrements réalisés de la masse d'eau résiduelle.

2. Procédé selon la revendication 1, **caractérisé en ce qu'**à l'étape e), on détermine l'indice de performance qui est égal à la différence entre la masse de l'eau résiduelle M1 mesurée à un instant T1 et la masse de l'eau résiduelle M2 mesurée à un instant T2, T2 correspondant à la fin de l'ébullition de la masse d'eau résiduelle.

3. Procédé selon la revendication 2, **caractérisé en ce que** T1 est égal à T0 + 5 secondes et T2 est égal à T0 + 95 secondes.

4. Procédé selon l'une quelconque des revendications 1 à 3, **caractérisé en ce que** l'indice de performance est égal à la moyenne de N mesures successives de l'indice de performance, N étant supérieur à 5, de préférence supérieur à 10.

5. Procédé selon l'une quelconque des revendications 1 à 4, **caractérisé en ce qu'**à l'étape d), la masse prédéterminée d'eau M est supérieure à 150 grammes, de préférence supérieure à 200g.

6. Procédé selon l'une quelconque des revendications 1 à 5, **caractérisé en ce qu'**à l'étape d), on met en œuvre une balance (30) sur laquelle sont agencés les moyens de chauffe (20) et le récipient le récipient de cuisson (1a, 1b).

7. Procédé selon l'une quelconque des revendications 1 à 6, **caractérisé en ce qu'**à l'étape b), la température prédéterminée T est supérieure ou égale à 200°C.

8. Procédé selon l'une quelconque des revendications 1 à 7, **caractérisé en ce qu'**à l'étape b), on met en œuvre un pistolet thermique (35) pour mesurer la température de la face supérieure du fond.

9. Procédé selon l'une quelconque des revendications 1 à 8, **caractérisé en ce que** les moyens de chauffe sont formés par une plaque de cuisson au gaz (20).

10. Procédé selon l'une quelconque des revendications 1 à 9, **caractérisé en ce qu'**à l'étape d), l'intervalle de temps pour mesurer et enregistrer la masse d'eau résiduelle est d'une seconde.

11. Procédé selon l'une quelconque des revendications précédentes, **caractérisé en ce que** le récipient de cuisson (1a, 1b) est une poêle, une casserole, une sauteuse ou un faitout.

## Patentansprüche

1. Verfahren zum Bestimmen eines Performance-Index eines Kochbehälters (1a, 1b), der einer Heizleistung unterworfen wird, die von Heizmitteln (20) erzeugt wird, wobei der Index für die Wärmeträgheit des Kochbehälters (1a, 1b) repräsentativ ist, um Nahrungsmittel anzubraten, wobei der Kochbehälter (1a, 1b) einen Boden (3a, 3b) und eine Seitenwand (4a, 4b) umfasst, **dadurch gekennzeichnet, dass** es die folgenden Schritte umfasst:
a) Unterwerfen des Bodens (3a, 3b) des Kochbehälters (1a, 1b) den Heizmitteln (20), die mit einer bestimmten Heizleistung in Betrieb genommen sind, Erhitzen des Bodens (3a, 3b), das eine Erhöhung der Temperatur einer oberen Fläche (7a, 7b) des Bodens (3a, 3b) und der Seitenwand (4a, 4b) nach sich zieht,
b) in regelmäßigen Intervallen Messen und Aufzeichnen der Temperatur der oberen Fläche (7a, 7b) des Bodens (3a, 3b), bis die gemessene Temperatur eine vorbestimmte Temperatur T erreicht,
c) Abschalten der Heizmittel (20) und gleichzeitiges Gießen einer vorbestimmten Wassermasse M in den Kochbehälter in einem Augenblick T0,
d) in regelmäßigen Intervallen Messen und Aufzeichnen der Restwassermasse in dem Kochbehälter,
e) Bestimmen des Performance-Index ausgehend von den ausgeführten Berechnungen und Aufzeichnungen der Restwassermasse.

2. Verfahren nach Anspruch 1, **dadurch gekennzeichnet, dass** bei dem Schritt e) der Performance-Index bestimmt wird, der gleich dem Unterschied zwischen der Restwassermasse M1, die in einem Augenblick T1 gemessen wird, und der Restwassermasse M2, die in einem Augenblick T2 gemessen wird, ist, wobei T2 dem Ende des Kochens der Restwassermasse entspricht.

3. Verfahren nach Anspruch 2, **dadurch gekennzeichnet, dass** T1 gleich T0 + 5 Sekunden ist, und T2 gleich T0 + 95 Sekunden ist.

4. Verfahren nach einem der Ansprüche 1 bis 3, **dadurch gekennzeichnet, dass** der Performance-Index gleich dem Durchschnitt von N aufeinanderfolgenden Messungen des Performance-Index ist, wobei N größer als 5, vorzugsweise größer als 10 ist.

5. Verfahren nach einem der Ansprüche 1 bis 4, **dadurch gekennzeichnet, dass** bei dem Schritt d) die vorbestimmte Wassermasse M größer als 150 Gramm, vorzugsweise größer als 200 g ist.

6. Verfahren nach einem der Ansprüche 1 bis 5, **dadurch gekennzeichnet, dass** bei dem Schritt d) eine Waage (30) umgesetzt wird, auf der die Heizmittel (20) und der Kochbehälter der Behälter (1a, 1b) eingerichtet sind.

7. Verfahren nach einem der Ansprüche 1 bis 6, **dadurch gekennzeichnet, dass** bei dem Schritt b) die vorbestimmte Temperatur T größer oder gleich 200 °C ist.

8. Verfahren nach einem der Ansprüche 1 bis 7, **dadurch gekennzeichnet, dass** bei dem Schritt b) eine thermische Pistole (35) umgesetzt wird, um die Temperatur der oberen Fläche des Bodens zu messen.

9. Verfahren nach einem der Ansprüche 1 bis 8, **dadurch gekennzeichnet, dass** die Heizmittel aus einer Gaskochplatte (20) gebildet sind.

10. Verfahren nach einem der Ansprüche 1 bis 9, **dadurch gekennzeichnet, dass** bei dem Schritt d) das Zeitintervall zum Messen und Aufzeichnen der Restwassermasse eine Sekunde beträgt.

11. Verfahren nach einem der vorstehenden Ansprüche, **dadurch gekennzeichnet, dass** der Kochbehälter (1a, 1b) eine Pfanne, ein Kochtopf, eine Bratpfanne oder ein Schmortopf ist.

## Claims

1. Method for determining a performance index of a cooking vessel (1a, 1b) subjected to a heating power generated by means of heating (20), said index being representative of the thermal inertia of said cooking vessel (1a, 1b) to sear food, said cooking vessel (1a, 1b) comprising a bottom (3a, 3b) and a side wall (4a, 4b), **characterised in that** it comprises the following steps:
a) subjecting the bottom (3a, 3b) of the cooking vessel (1a, 1b) to the means of heating (20) turned on at a determined heating power, with the heating of the bottom (3a, 3b) resulting in an increase in the temperature of the upper face (7a, 7b) of the bottom (3a, 3b) and of the side wall (4a, 4b),
b) measuring and recording at regular time intervals the temperature of the upper face (7a, 7b) of the bottom (3a, 3b) until the temperature measured reaches a predetermined temperature T,
c) cutting off the means of heating (20) and simultaneously pouring a predetermined mass of water M into the cooking vessel at instant T0,
d) measuring and recording at regular time intervals the mass of residual water in the cooking vessel,
e) determining the performance index from the calculations and recording made of the mass of residual water.

2. Method according to claim 1, **characterised in that** in step e), the performance index is determined which is equal to the difference between the mass of the residual water M1 measured at instant T1 and the mass of residual water M2 measured at instant T2, T2 corresponding to the end of the boiling of the mass of residual water.

3. Method according to claim 2, **characterised in that** T1 is equal to T0 + 5 seconds and T2 is equal to T0 + 95 seconds.

4. Method according to any of claims 1 to 3, **characterised in that** the performance index is equal to the average of N successive measurements of the performance index, N being greater than 5, preferably greater than 10.

5. Method according to any of claims 1 to 4, **characterised in that** in step d), the predetermined mass of water M is greater than 150 grams, preferably greater than 200g.

6. Method according to any of claims 1 to 5, **characterised in that** in step d), a balance (30) is implemented on which the means of heating (20) and the vessel the cooking vessel (1a, 1b) are arranged.

7. Method according to any of claims 1 to 6, **characterised in that** in step b), the predetermined temperature T is greater than or equal to 200°C.

8. Method according to any of claims 1 to 7, **characterised in that** in step b), a heat gun (35) is implemented to measure the temperature of the upper face of the bottom.

9. Method according to any of claims 1 to 8, **characterised in that** the means of heating are formed by a gas cooking plate (20).

10. Method according to any of claims 1 to 9, **characterised in that** in step d), the time interval for measuring and recording the mass of residual water is one second.

11. Method according to any preceding claim, **characterised in that** the cooking vessel (1a, 1b) is a frying pan, a saucepan, a saute pan or a stewpot.
